# EUROPEAN PATENT APPLICATION

(11) **EP 2 799 968 A1**
(43) Date of publication of application: **05.11.2014**
(21) Application number: 13166363.5
(22) Date of filing: 03.05.2013
(51) Int. Cl.: G06F 3/048

(54) **Method, system and computer readable medium for providing electronic content**

(71) Applicant: i-POL GmbH, 74072 Heilbronn (DE)
(72) Inventor: Rühmann, Lars, 20146 Hamburg (DE)
(74) Representative: Andrae | Westendorp Patentanwälte Partnerschaft

(57) **Abstract**

The invention relates to a System for enabling interactive viewing of content on a display, the system comprising means for displaying a polyhedral structure comprising a plurality of faces, each face representing content data obtained from a remote source, wherein the polyhedral structure has at least one center face of primary content surrounded by peripheral faces of secondary content related to the primary content; means for animating the polyhedral structure on the display in response to a first input of a user; means for displaying in response to a second input of the user an unfolded view of at least part of the polyhedral structure as a tessellation comprising a plurality of tiles, each tile of the tessellation corresponding to a face of the polyhedral structure; wherein tiles in the tessellation being arranged such that they at least partly match the arrangement of corresponding faces in the polyhedral structure, and the tessellation comprising at least one tile corresponding to a center face of the polyhedral structure selected according to the second input of the user.

## Description

The present invention relates to providing electronic content. More particularly, the present invention relates to enabling interactive navigation, selection and viewing content data served from a remote source.

### Background of the invention

In the "information age" we live today a wealth of information is continuously spread to recipients for example connected via the Internet or other means.

In order to present a large amount of multimedia content in different formats effectively (text, images, videos, etc.) on a small screen of a mobile device an efficient form of presentation is needed. Additionally it helps having a basic structure subdivided into a plurality of pieces. The main challenge is to preserve coherence of original content for the user so that he always keeps in touch with the presentation of the information as it changes.

By taking advantage of state-of-the-art gesture controls for mobile devices the user can be provided with an intelligent control of many different information without requiring too much user interaction.

US2012/0174038 A1 pertains to a system and method for enabling navigation and selection of content using an interactive virtual sphere.

"futurezone", an iPhone™ application or app available from the Apple™ iTunes™ AppStore™ pertains a portal to provide news content to mobile users.

### Summary of the invention

It is an object of the present invention to provide a system, method and computer readable medium enabling improved provision of electronic content.

This object is achieved by a system in accordance with the features of claim 1 or 5, a method in accordance with the features of claim 8 or 12, and/or a computer program product in accordance with the features of claim 15.

According to the invention there may be provided a system for enabling interactive viewing of content on a display, the system comprising:
- means for displaying a polyhedral structure comprising a plurality of faces, each face representing content data obtained from a remote source, wherein the has at least one center face of primary content surrounded by peripheral faces of secondary content related to the primary content;
- means for animating the polyhedral structure on the display in response to a first input of a user;
- means for displaying in response to a second input of the user an unfolded view of at least part of the polyhedral structure as a tessellation comprising a plurality of tiles, each tile of the tessellation corresponding to a face of the polyhedral structure,
- tiles in the tessellation being arranged such that they at least partly match the arrangement of corresponding faces in the polyhedral structure, and
- the tessellation comprising at least one tile corresponding to a center face of the polyhedral structure selected according to the second input of the user.

According to the invention there may be provided a system enabling mapping a three-dimensional polyhedral structure into a two-dimensional unfolded view of at least part of the polyhedral structure as a tessellation for viewing content on a computer display, wherein the polyhedral structure comprising a plurality of faces, each face representing content data obtained from a remote source, wherein the polyhedral structure has at least one center face of primary content surrounded by peripheral faces of secondary content related to the primary content; and the tessellation comprises a plurality of tiles, each tile of the tessellation corresponding to a face of the polyhedral structure, wherein tiles in the tessellation being arranged such that they at least partly match the arrangement of corresponding faces in the polyhedral structure, and the tessellation comprising at least one tile corresponding to a center face of the polyhedral structure selected according to the second input of the user.

According to the invention there may be provided a computer implemented method of controlling interactive viewing of content on a display, the method comprising:
- displaying a polyhedral structure comprising a plurality of faces, each face representing content data obtained from a remote source, wherein the has at least one center face of primary content surrounded by peripheral faces of secondary content related to the primary content;
- animating the polyhedral structure on the display in response to a first input of a user; and
- displaying in response to a second input of the user an unfolded view of at least part of the polyhedral structure as a tessellation comprising a plurality of tiles, each tile of the tessellation corresponding to a face of the polyhedral structure,
wherein tiles in the tessellation being arranged such that they at least partly match the arrangement of corresponding faces in the polyhedral structure, and the tessellation comprising at least one tile corresponding to a center face of the polyhedral structure selected according to the second input of the user.

According to the invention there may be provided a computer implemented method of mapping a three-dimensional polyhedral structure into a two-dimensional unfolded view of at least part of the polyhedral structure as a tessellation for viewing content on a computer display, wherein the polyhedral structure comprising a plurality of faces, each face representing content data obtained from a remote source, wherein the polyhedral structure has at least one center face of primary content surrounded by peripheral faces of secondary content related to the primary content; and the tessellation comprising a plurality of tiles, each tile of the tessellation corresponding to a face of the polyhedral structure, wherein tiles in the tessellation being arranged such that they at least partly match the arrangement of corresponding faces in the polyhedral structure, and the tessellation comprising at least one tile corresponding to a center face of the polyhedral structure selected according to the second input of the user.

According to the invention there may be provided a computer program product comprising a non-transitory computer-usable medium having computer-readable program codes embodied in the medium, wherein the program codes when executed causing a computer to execute the method according to the invention.

In accordance with the invention a system of the invention can further comprise means for providing a bi-directional transition between the display of a face representing parent content data and the display of a corresponding tile representing child content data, the child content data related to the parent content data, and the display of the parent content data gradually morphing into the display of the child content data.

In accordance with the invention child content data may provide finer detail than the parent content data they are related to.

In accordance with the invention controlling interactive viewing can comprise enabling navigation and selection of content on the basis of the first input of the user and the second input of the user, respectively.

In accordance with the invention a tile in the tessellation corresponding to a peripheral face in the polyhedral structure can be represented by a reference to or a display of content represented by the tile.

In accordance with the invention content data represented by a face or a tile can correspond to at least one of: one or more audio/video streams or references thereto; one or more images or references thereto; one or more documents or references thereto; and one or more websites or references thereto.

In accordance with the invention said means for animating the polyhedral structure can comprise means for displaying a different face of thereof, particularly carrying out a three-dimensional transformation, and more particularly a rotation of the polyhedral structure.

In accordance with the invention the polyhedral structure can be adapted to represent a sphere, in particular a soccer ball.

In accordance with the invention interactive viewing can be provided on a mobile device.

In accordance with the invention a method according to the invention can further comprise providing a bi-directional transition between the display of a face representing parent content data and the display of a corresponding tile representing child content data, the child content data related to the parent content data, and the display of the parent content data gradually morphing into the display of the child content data.

In accordance with the invention child content data can provide finer detail than the parent content data they are related to.

In accordance with the invention controlling interactive viewing can comprise enabling navigation and selection of content on the basis of the first input of the user and the second input of the user, respectively.

In accordance with the invention a tile in the tessellation corresponding to a peripheral face in the polyhedral structure can be represented by a reference to or a display of content represented by the tile.

In accordance with the invention content data represented by a face or a tile can correspond to at least one of: one or more audio/video streams or references thereto; one or more images or references thereto; one or more documents or references thereto; and one or more websites or references thereto.

In accordance with the invention animating the polyhedral structure can comprise displaying a different face of thereof, particularly carrying out a three-dimensional transformation, and more particularly a rotation of the polyhedral structure.

In accordance with the invention the polyhedral structure can represent a sphere, in particular a soccer ball.

In accordance with the invention interactive viewing can be provided on a mobile device.

### Brief description of the drawings

Embodiments of the present invention will now be described, by way of example, with reference to the accompanying drawings in which:
Figure 1a-b shows examples of a graphical user interface provided by an application according to the present invention.
Figure 1a shows a soccer ball in a general display comprising a central face according to the present invention. Figure 1 b shows a specific display of the central face.
Figures 2a-d illustrate interactive gestures to navigate through information content delivered on screen by an application according to the invention.

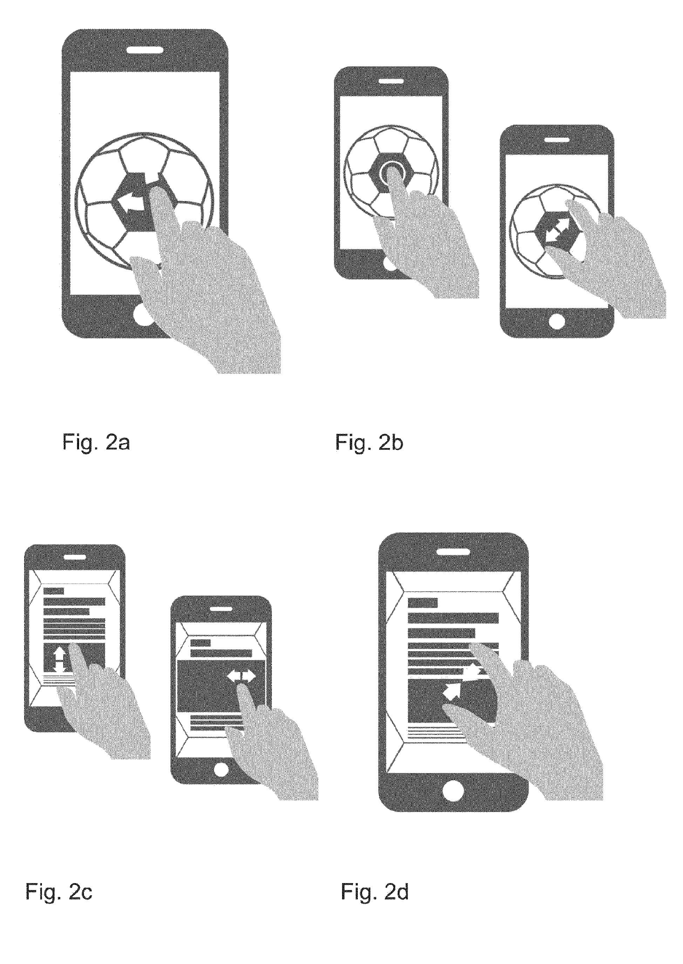

Figure 2a schematically shows user interaction effecting rotation of the polyhedral structure. Figure 2b shows user interaction effecting transition from a general display (parent) to a specific display (child) of corresponding content. Figure 2c shows user interaction effecting tile to tile navigation. Figure 2d shows user interaction effecting return from specific display to the corresponding general display.

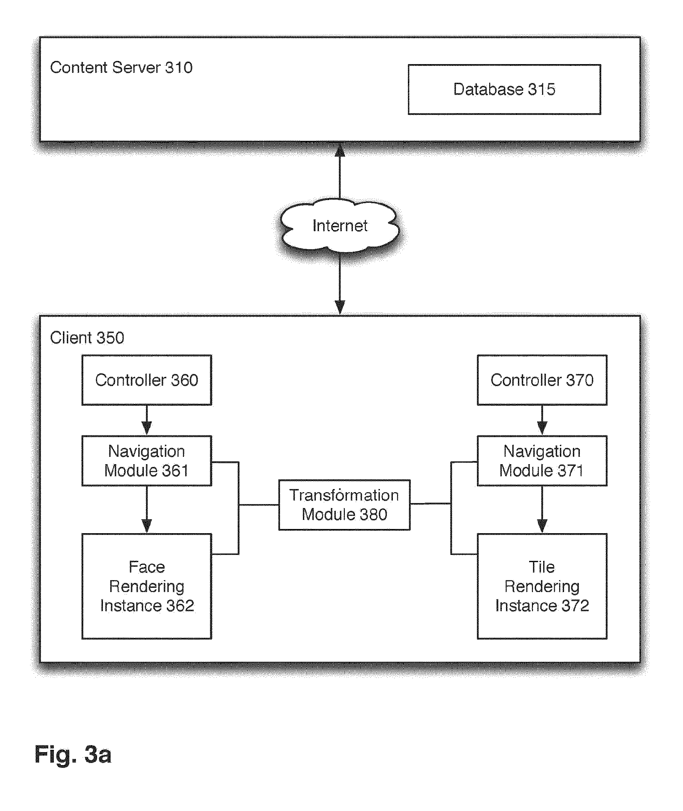

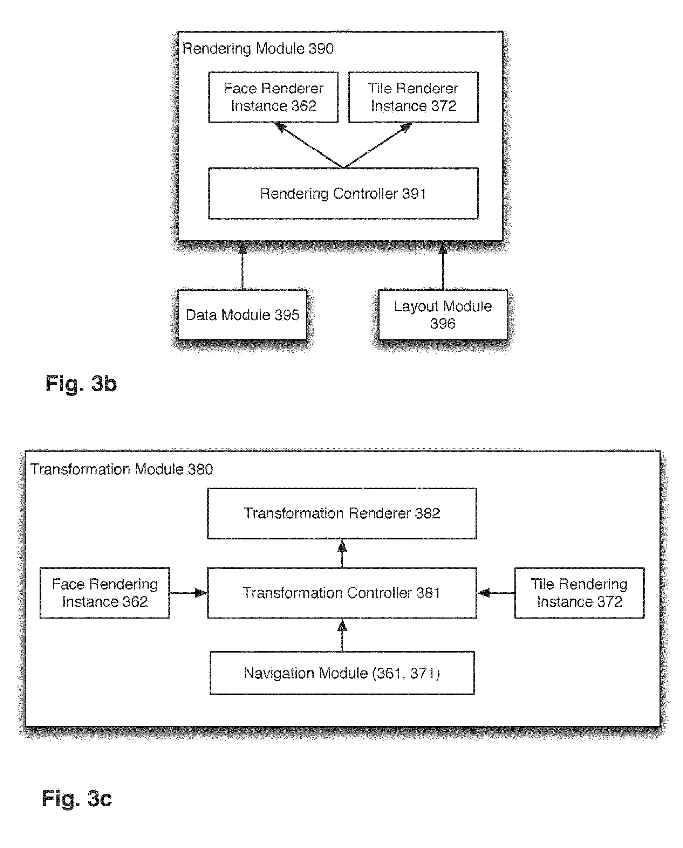

Figure 3a shows the architecture of a system according to the present invention. Figure 3b shows the architecture of the rendering module of the system according to the present invention. Figure 3c shows the architecture of the transformation module of the system according to the present invention.

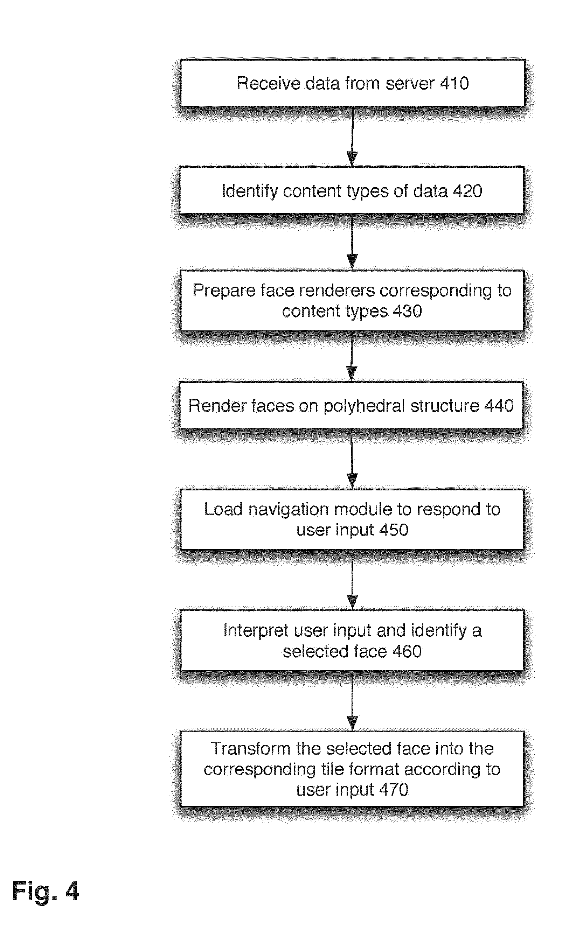

Figure 4 shows a method for providing content according to the present invention.

### Detailed description of the invention

The sheer volume of electronic content, such as news, deliverable from a single site of the Internet, for example, calls for efficient, yet intuitive, ways of providing electronic content for convenient navigation, selection and viewing by a recipient or user.

### Graphical user interface

News provided over the Internet, for example, shall attract and invite a user to retrieve, select and ultimately "consume" the content served to him. To this end, a careful balance has to be found between delivering as much information as possible to the user at any given time and to avoid drowning him in an overwhelming tide of information.

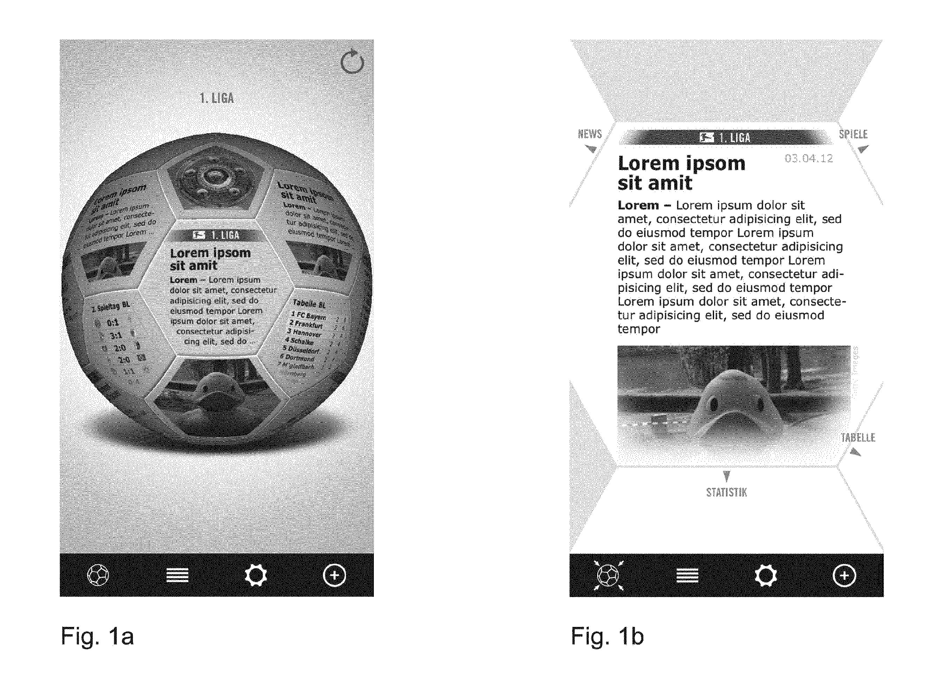

Figure 1 shows examples of a graphical user interface provided by an application according to the present invention. Content data is served to the user in two distinct display formats. A first or general format represents content data obtained from a remote source in portions projected upon faces of a three-dimensional polyhedral structure. The term "polyhedral structure" meaning a structure comprising (poly-) many (-hydra) faces. The polyhedral structure may depict a sphere or a ball. The individual faces of the polyhedral structure may show content, in particular news content related to sports.

In one embodiment of the present invention a polyhedral structure is displayed as a soccer ball on the screen of a mobile device, see figure 1 a. Related news, e.g. sports news pertaining to a group of content, e.g. a specific soccer ball league, are represented in adjacent faces on the soccer ball. On the soccer ball multiple groups of content may be arranged. The soccer ball invites the user to "play" with, i.e. to move or rotate it by means of interactive gestures to navigate between groups of content. The rotational movement of the soccer ball allows the user to perceive related content in groups of faces distributed over the ball, and to visit all groups of faces distributed over the ball.

If the user wishes to obtain more detailed information on a subject shown in a particular face of the polyhedral structure depicted as a soccer ball, for example, he or she may invoke a more detailed display of the face of interest. Upon invocation by the user an application according to the present invention provides an animated display sequence changing from the general format of the three-dimensional polyhedral structure to an unfolded view of part of the three-dimensional polyhedral structure carrying the face of interest.

The unfolded view may be depicted in a display of a two-dimensional tessellation comprising tiles corresponding to the face of interest and faces surrounding the face of interest on the polyhedral structure, i.e. the soccer ball, see figure 1 b.

In the center of the tessellation of the unfolded view the content of the face of interest is displayed as a tile. A tile generally shows the content of the corresponding face with finer detail. A face showing a picture of a given resolution may be displayed as a tile showing a picture of higher resolution, for instance. A face showing a list or table with a given number of rows and columns may be displayed as a tile showing the same list or table with more rows and/or columns conveying additional information, for instance. In general, the display of a tile is a view of the corresponding face enriched in content. The display showing tiles is referred to as specific display format.

The user experience of the specific format may be further augmented by allowing the user to select virtually obscured parts of the content by navigating through the tile, e.g. by scrolling or panning.

In the graphical user interface provided by an application according to the invention the transition between a general display format as a polyhedral structure to a specific display format as a tessellation and from the specific display back to the general display has been identified to support or express coherence between the two display formats. Accordingly, the transition between general and specific display format has to be considered carefully.

The implementation or "choreography" of the transition provides the initial display shown in a face of the polyhedral structure and the final display shown in a tile of the tessellation and transforms the initial display seamlessly into the final display and vice versa. The initial display may be a list or table having only a few columns and the final display may be a multi-column list or table. During transition the list or table gets gradually spread until enough space is provided between the columns and additional columns can be inserted or faded in introducing additional information on the subject of the list or table resulting in the final multi-column list or table.

Similarly, the initial display may comprise a close-up picture of a scene and the final display may be a wide-angle view of the same scene.

The initial display is gradually zoomed out until the viewing angle of the final display is reached and the final display can be faded in seamlessly. A transition from the final display to the initial display basically reverses the sequence of images from initial display to final display.

### Navigation

Figures 2a-d illustrate interactive gestures to navigate through information content delivered on screen by an application according to the invention. The interaction is exemplarily described as being carried out on a touch screen display. However, the interaction may likewise be effected on a desktop or overhead display operatively coupled to input devices operable by a user, for example a pointing device or a touch pad.

Figure 2a schematically shows a display of a polyhedral structure, a soccer ball, for instance. Swiping a finger over the display effects a rotation of the polyhedral structure or ball making visible further content provided by the application. The user experience may be further augmented by audible feedback indicating a different face coming into central position, for instance.

Figure 2b illustrates different ways to invoke the transition from general display comprising a central face, schematically rendered in black, to an unfolded view or tessellation displaying in the specific display format the content of the central face in a corresponding tile (not shown). The transition is invoked by tapping the central face or by pinching out two fingers over the central face. The resulting tile (not shown) displays a more detailed view or an enriched, augmented or extended view of the central face.

Figure 2c schematically shows a display of a tile in a tessellation. In the display virtually hidden parts of the content pertaining to the tile may be scrolled into view (not shown). Swiping diagonally over the tile moves content of neighboring tiles into view. Possible movements may be indicated on the display by thick moving arrows, for example. In this way navigation from tile to tile is enabled. The content of a respective neighboring tile may be indicated by a general reference, a text for example, accompanied by a thin arrow.

Figure 2d schematically illustrates how to return from a specific or tile view to the general view of a polyhedral display or ball by pinching in on the tile currently displayed.

### System architecture

Figure 3a shows a system according to the present invention comprising a client, e.g. a mobile device, connected to a server over the Internet.

The client 350 comprises a first controller 360 controlling navigation module 361 and face rendering instance 362. The navigation module 361 receives input from the user and converts it to instructions controlling the face rendering instance 362.

The client 350 further comprises a second controller 370 controlling navigation module 371 and tile rendering instance 372. The navigation module 371 receives input from the user and converts it to instructions controlling the tile rendering instance 372.

The transition between a general display rendered by the face rendering instance and the corresponding specific display rendered by the tile rendering instance is effected by the transformation module 380 connecting the two rendering modules.

The server 310 comprises a database 315 storing content data. Upon request of the client 350 the content server 310 provides content data as JavaScript Object Notation (JSON) formatted data.

Figure 3b shows the architecture of the rendering module 390 generating face rendering instance 362 and tile rendering instance 372 controlled by the rendering controller 391. Input to the rendering module consists of data from the data module 395 and the layout module 396. The data module 395 comprises content elements represented by data structures as shown in table 1.

**Table 1 Data structures representing content elements**

| |
|---|
| Objective-C classes |
| Dictionaries |
| JPEG |
| PNG |

Program objects implementing an application according to the present invention are represented in the implementation language Objective-C as Objective-C classes. Dictionaries comprise key-value pairs of information, e.g.
"title": "lorem ipsum",
"subtitle": "sit amut dolor".

In an embodiment of the present invention, images may be represented in a binary format, such as JPEG or PNG.

Figure 3c show the transformation module 380. The transformations controller 381 receives input from any of the navigation modules 361, 371 respectively. Face rendering instance 362 and tile rendering instance 372 provide further input to the transformation controller 381 which in turn controls the transformation renderer 382.

Figure 4 shows a method for providing content according to the present invention. In step 410 data is fetched from the server. From the data content types are identified in step 420. In step 430 face renderers corresponding to the content types are prepared. In step 440 the face renderer 362 renders the faces comprised in a general view of the received content data. In step 450 an instance of the face navigation module 361 is loaded to respond to user input. In step 460 user input is interpreted to identify a selected face. In step 470 the selected face is transformed into a corresponding tile based on the user input.

## Claims

1. System for enabling interactive viewing of content on a display, the system comprising:
- means for displaying a polyhedral structure comprising a plurality of faces, each face representing content data obtained from a remote source, wherein the has at least one center face of primary content surrounded by peripheral faces of secondary content related to the primary content;
- means for animating the polyhedral structure on the display in response to a first input of a user;
- means for displaying in response to a second input of the user an unfolded view of at least part of the polyhedral structure as a tessellation comprising a plurality of tiles, each tile of the tessellation corresponding to a face of the polyhedral structure,
**characterized by**
tiles in the tessellation being arranged such that they at least partly match the arrangement of corresponding faces in the polyhedral structure, and
the tessellation comprising at least one tile corresponding to a center face of the polyhedral structure selected according to the second input of the user.

2. System according to the preceding claim, further comprising means for providing a bi-directional transition between the display of a face representing parent content data and the display of a corresponding tile representing child content data, the child content data related to the parent content data, and the display of the parent content data gradually morphing into the display of the child content data.

3. System according to the preceding claim, wherein child content data provide finer detail than the parent content data they are related to.

4. System according to any of the preceding claims, wherein controlling interactive viewing comprises enabling navigation and selection of content on the basis of the first input of the user and the second input of the user, respectively.

5. System enabling mapping a three-dimensional polyhedral structure into a two-dimensional unfolded view of at least part of the polyhedral structure as a tessellation for viewing content on a computer display, wherein
the polyhedral structure comprising a plurality of faces, each face representing content data obtained from a remote source, wherein the polyhedral structure has at least one center face of primary content surrounded by peripheral faces of secondary content related to the primary content; and
the tessellation comprising a plurality of tiles, each tile of the tessellation corresponding to a face of the polyhedral structure,
**characterized by**
tiles in the tessellation being arranged such that they at least partly match the arrangement of corresponding faces in the polyhedral structure, and
the tessellation comprising at least one tile corresponding to a center face of the polyhedral structure selected according to the second input of the user.

6. System according to any of the preceding claims, wherein a tile in the tessellation corresponding to a peripheral face in the polyhedral structure is represented by a reference to or a display of content represented by the tile.

7. System according to any of the preceding claims, wherein content data represented by a face or a tile corresponds to at least one of: one or more audio/video streams or references thereto; one or more images or references thereto; one or more documents or references thereto; and one or more websites or references thereto.

8. Computer implemented method of controlling interactive viewing of content on a display, the method comprising:
- displaying a polyhedral structure comprising a plurality of faces, each face representing content data obtained from a remote source, wherein the has at least one center face of primary content surrounded by peripheral faces of secondary content related to the primary content;
- animating the polyhedral structure on the display in response to a first input of a user;
- displaying in response to a second input of the user an unfolded view of at least part of the polyhedral structure as a tessellation comprising a plurality of tiles, each tile of the tessellation corresponding to a face of the polyhedral structure,
**characterized by**
tiles in the tessellation being arranged such that they at least partly match the arrangement of corresponding faces in the polyhedral structure, and
the tessellation comprising at least one tile corresponding to a center face of the polyhedral structure selected according to the second input of the user.

9. Method according to the preceding claim, further comprising providing a bi-directional transition between the display of a face representing parent content data and the display of a corresponding tile representing child content data, the child content data related to the parent content data, and the display of the parent content data gradually morphing into the display of the child content data.

10. Method according to the preceding claim, wherein child content data provide finer detail than the parent content data they are related to.

11. Method according to any of the three preceding claims, wherein controlling interactive viewing comprises enabling navigation and selection of content on the basis of the first input of the user and the second input of the user, respectively.

12. Computer implemented method of mapping a three-dimensional polyhedral structure into a two-dimensional unfolded view of at least part of the polyhedral structure as a tessellation for viewing content on a computer display, wherein
the polyhedral structure comprising a plurality of faces, each face representing content data obtained from a remote source, wherein the polyhedral structure has at least one center face of primary content surrounded by peripheral faces of secondary content related to the primary content; and
the tessellation comprising a plurality of tiles, each tile of the tessellation corresponding to a face of the polyhedral structure,
**characterized by**
tiles in the tessellation being arranged such that they at least partly match the arrangement of corresponding faces in the polyhedral structure, and
the tessellation comprising at least one tile corresponding to a center face of the polyhedral structure selected according to the second input of the user.

13. Method according to any of the five preceding claims, wherein a tile in the tessellation corresponding to a peripheral face in the polyhedral structure is represented by a reference to or a display of content represented by the tile.

14. Method according to any of the six preceding claims, wherein content data represented by a face or a tile corresponds to at least one of: one or more audio/video streams or references thereto; one or more images or references thereto; one or more documents or references thereto; and one or more websites or references thereto.

15. Computer program product comprising a non-transitory computer-usable medium having computer-readable program codes embodied in the medium, wherein the program codes when executed causing a computer to execute the method according to any of the seven preceding claims.
